# EUROPÄISCHE PATENTSCHRIFT

(11) **EP 2 443 973 B1**
(45) Veröffentlichungstag und Bekanntmachung des Hinweises auf die Patenterteilung: **11.12.2013**
(21) Anmeldenummer: 11185740.5
(22) Anmeldetag: 19.10.2011
(51) Int. Cl.: A47J 31/44

(54) **Flüssigkeitsentnahmeeinrichtung**
Liquid removal device
Dispositif de prélèvement de liquide

(30) Priorität: 20.10.2010 DE 202010014450 U
(43) Veröffentlichungstag der Anmeldung: 25.04.2012
(73) Patentinhaber: WMF Württembergische Metallwarenfabrik AG, 73309 Geislingen/Steige (DE)
(72) Erfinder: Bönsch, Torsten, 73312 Geislingen/Steige (DE); Krips, Tobias, 89075 Ulm (DE); Eicke, Joel, 89075 Ulm (DE)
(74) Vertreter: BRP Renaud & Partner

(56) Entgegenhaltungen:
- WO-A1-2005/074770
- GB-A- 2 464 975
- US-B1- 6 192 785

## Beschreibung

Die vorliegende Erfindung betrifft eine Flüssigkeitsentnahmeeinrichtung, insbesondere zum Entnehmen von Milch aus einem Behälter. Die Erfindung betrifft außerdem einen mit einer derartigen Flüssigkeitsentnahmeeinrichtung ausgestatteten Kaffeevollautomaten.

Aus der US 6,192,785 B1 ist eine Flüssigkeitsentnahmeeinrichtung mit einer rohrförmigen, steifen Lanze zum Einstecken in einen Behälter bekannt, sowie mit einem Lanzenkopf, in welchem die Lanze und zumindest ein weiteres Leitungselement einsteckbar sind.

Aus der GB 2 464 975 A und aus der WO 2005/074770 A1 sind ebenfalls Flüssigkeitsentnahmeeinrichtungen bekannt.

In vielen Kaffeevollautomaten ist eine Flüssigkeitsentnahmeeinrichtung zum Entnehmen von Milch aus einem Behälter vorgesehen, die bspw. als Schlauch ausgebildet ist. Bei bekannten Kaffeevollautomaten wird dabei die Milch üblicherweise in einen separaten Behälter umgefüllt, in dessen Deckel oder oberer Öffnung besagter Schlauch oder ein Steigrohr eingeführt werden, um die Milch zu entnehmen. Zur Lagerung der Milch in einem Kühlschrank muss der Schlauch bzw. das Rohr entnommen und gereinigt werden, was unter Umständen aufwändig und umständlich ist. Da Milch zudem ein empfindliches und leicht verderbliches Lebensmittel ist, ist die Vermeidung von Verunreinigungen, Bakterien und Keimen essentiell. Darüber hinaus sollten die mit Milch in Kontakt kommenden Flächen möglichst klein gehalten werden und einfach zu reinigen sein. Ein weiteres Bedürfnis ist der Wunsch, die Temperatur der Milch bzw. des Milchschaums bei der Verwendung in Kaffeevollautomaten sowie die Porigkeit und die Menge des Aufschlages beim Schäumen möglichst einfach regeln zu können.

Die vorliegende Erfindung beschäftigt sich mit dem Problem, eine Flüssigkeitsentnahmeeinrichtung anzugeben, welche einfach an einen Kaffeevollautomaten adaptiert werden kann und möglichst einfach handhabbar und zu reinigen ist.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, eine Flüssigkeitsentnahmeeinrichtung zum Entnehmen von Milch aus einem Behälter mit einer rohrförmigen, steifen Lanze zum Einstecken in den Behälter auszustatten sowie mit einem Lanzenkopf, in welchen die Lanze und zumindest ein weiteres Leitungselement bspw. ein zu einem Kaffeevollautomaten führender (Milch-) schlauch einsteckbar sind. Eine derartige Flüssigkeitsentnahmeeinrichtung ermöglicht es, diese besonders einfach mit einem Kaffeevollautomaten, bspw. durch ein Einstecken eines Milchschlauchs in den Lanzenkopf, zu verbinden, wobei der Lanzenkopf mit der daran angeordneten Lanze einfach zu reinigen und leicht in den Behälter mit der Milch einzustecken ist. Zusätzlich ist am Lanzenkopf eine Drosseleinrichtung zur Drosselung der durch die Flüssigkeitsentnahmeeinrichtung strömenden Flüssigkeit vorgesehen, wobei über die Drosseleinrichtung die Durchflussmenge durch die Flüssigkeitsentnahmeeinrichtung einstellbar ist. Ist die Herstellung von bspw. heißer Milch oder Milchschaum abgeschlossen, so kann der Milchschlauch vom Lanzenkopf getrennt werden und die Flüssigkeitsentnahmeeinrichtung, d. h. der Lanzenkopf mit der daran angeordneten Lanze zusammen mit dem Milchbehälter in einen Kühlschrank gestellt werden. Der am Kaffeevollautomaten verbleibende Milchschlauch kommt äußerlich nicht mit Milch in Kontakt, sodass die Gefahr von Verunreinigungen deutlich reduziert werden kann. Die im Inneren des Milchschlauchs noch vorhandene Milch kann durch einen gewöhnlichen Spülgang entfernt werden.

Bei einer vorteilhaften Weiterbildung der erfindungsgemäßen Lösung, ist die Lanze an ihrem freien Ende abgeschrägt und insbesondere geschärft. Eine derartig ausgebildete Lanze ermöglicht es, diese durch einen geschlossenen Deckel eines Milchbehälters, bspw. eines Tetra-Paks, hindurchzustechen und dadurch gleichzeitig an diesem Milchbehälter zu fixieren. Selbstverständlich ist auch denkbar, dass die Lanze in eine üblicherweise im Deckelbereich vorgesehene Öffnung des Milchbehälters eingesteckt wird.

Zweckmäßig ist am Lanzenkopf eine Drosseleinrichtung zur Drosselung der durch die Lanze strömenden Flüssigkeit, insbesondere der Milch, vorgesehen. Eine derartige Drosseleinrichtung ermöglicht dabei das Regeln der Durchflussmenge von angesaugter Flüssigkeit, d. h. insbesondere von angesaugter Milch, durch den Lanzenkopf, wodurch insbesondere Parameter wie bspw. Milchtemperatur, Schaumaufschlags-Verhältnis und Porigkeit eines Milchschaums leicht zu steuern sind. Die Temperatur der anzusaugenden Milch kann durch die Drosseleinrichtung bspw. auf einfachste Weise gesteuert werden, da ein Drosseln der Durchflussmenge zu einem längeren Aufenthalt der angesaugten Milch in der Schäumkammer und damit zu einem stärkeren Erwärmen derselben führt, wogegen eine höhere Durchflussmenge, bspw. bei vollständig geöffneter Drosseleinrichtung, zu einem kürzeren Verbleiben der angesaugten Milch in der Schäumkammer führt, wodurch diese nicht so stark aufgeheizt wird. Durch die Regelung der Durchflussmenge durch den Lanzenkopf kann auch die Qualität des herzustellenden Milchschaums, insbesondere dessen Porigkeit, leicht beeinflusst werden, da bei einer gedrosselten Milchzufuhr ein größeres Verhältnis von Dampf zu angesaugter Milch in der Schäumkammer auftritt, wodurch der Milchschaum grobporiger wird. Die Drosseleinrichtung kann dabei eine Stellschraube aufweisen, die bei einem Verdrehen einen Durchflussquerschnitt durch den Lanzenkopf verändert. Eine derartige Stellschraube stellt dabei die einfachste Ausführungsform einer Steuerung der Durchflussmenge dar, wobei auch jede Art von Blenden zur Drosselung, d. h. zur Regelung des Durchflusses durch den Lanzenkopf, denkbar sind. Mit der erfindungsgemäß in den Lanzenkopf integrierten Drosseleinrichtung kann ein besonders kompakter und hochfunktionaler Lanzenkopf realisiert werden, der zudem, bspw. durch eine einfache Abnehmbarkeit der Lanze bzw. des Milchschlauchs vom Lanzenkopf zu reinigen ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch eine erfindungsgemäße Flüssigkeitsentnahmeeinrichtung, angeschlossen an einen Kaffeevollautomaten,
- Fig. 2: die Flüssigkeitsentnahmeeinrichtung mit teilweise geöffneter Drosseleinrichtung
- Fig. 3: eine Darstellung wie in Fig. 2, jedoch bei geschlossener Drosseleinrichtung,
- Fig. 4: die erfindungsgemäße Flüssigkeitsentnahmeeinrichtung in einer Explosionsdarstellung.

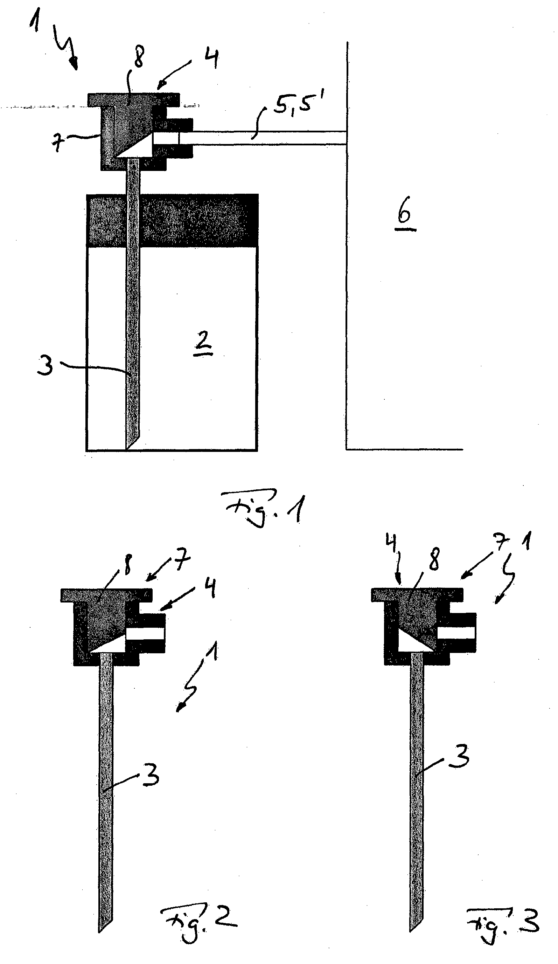

Entsprechend den Figuren 1 bis 4, weist eine erfindungsgemäße Flüssigkeitsentnahmeeinrichtung 1 zum Entnehmen von insbesondere Milch aus einem Behälter 2, eine rohrförmige, steife Lanze 3 zum Einstecken in den Behälter 2 auf. Ebenso weist die Flüssigkeitsentnahmeeinrichtung 1 einen Lanzenkopf 4 auf, in welchen die Lanze 3 und zumindest ein weiteres Leitungselement 5, bspw. ein Milchschlauch 5', einsteckbar sind. Über den Milchschlauch 5' kann die Flüssigkeitsentnahmeeinrichtung 1 bspw. mit einem Kaffeevollautomaten 6 verbunden werden.

Die Lanze 3 ist dabei aus einem steifen Werkstoff, bspw. aus Kunststoff oder aus Edelstahl ausgebildet und insbesondere leicht, bspw. in einer Spülmaschine, zu reinigen. Die Lanze 3 ist dabei ebenso wie das Leitungselement 5 vom Lanzenkopf 4 abnehmbar, insbesondere in diesen einsteckbar, ausgebildet. Am Lanzenkopf 4 ist gemäß den Figuren 1 bis 4 eine Drosseleinrichtung 7 zur Drosselung der durch die Flüssigkeitsentnahmeeinrichtung 1 strömenden Flüssigkeit vorgesehen. Diese Drosseleinrichtung 7 ist dabei lediglich rein optional vorzusehen, sodass der Lanzenkopf 4 generell auch ohne eine derartige Drosseleinrichtung 7 ausgebildet sein kann. Von besonderem Vorteil bei der erfindungsgemäßen Flüssigkeitsentnahmeeinrichtung 1 ist, dass diese leicht zerlegbar und damit leicht reinigbar ist und insbesondere verhindert, dass das flexible Leitungselement 5, bspw. der Milchschlauch 5', mit einer Außenoberfläche der im Behälter 2 angeordneter Milch in Berührung kommt und dadurch unter Umständen Keimnester bilden kann.

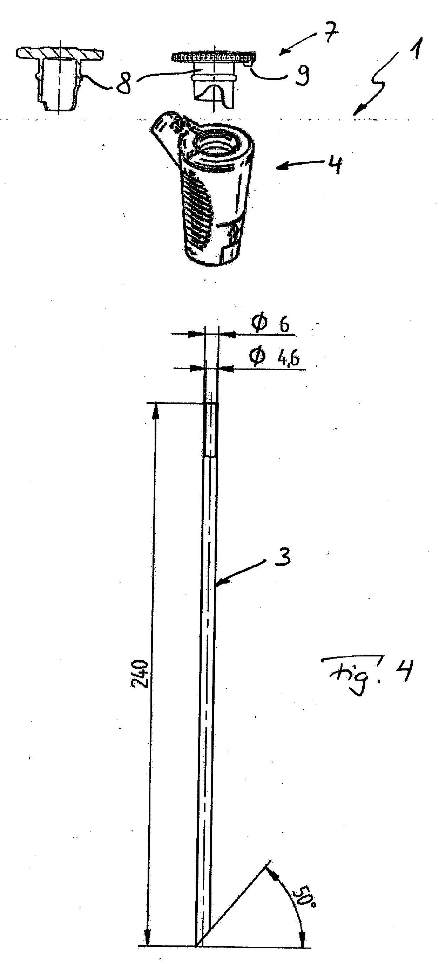

Die Lanze 3 kann an ihrem freien Ende abgeschrägt (vgl. Fig. 4) und insbesondere angeschärft sein, sodass mit dieser ein Durchstoßen des geschlossenen Behälters 2 an dessen Deckel möglich ist. Die Länge der Lanze 3 ist dabei so bemessen, dass der Behälter 2, bspw. ein Milch-Tetra-Pak^{®}, komplett entleert werden kann.

Betrachtet man die Drosseleinrichtung 7 näher, so kann man erkennen, dass diese eine Stellschraube 8 aufweist, die bei einem Verdrehen einen Durchflussquerschnitt durch den Lanzenkopf 4 verändert und dadurch eine Durchflussmenge an Milch durch die Flüssigkeitsentnahmeeinrichtung 1 steuert. Gemäß der Fig. 1 ist dabei die Stellschraube 8 in einer Stellung gezeigt, in welcher ein maximaler Durchflussquerschnitt zur Verfügung steht, sodass in dieser Stellung eine maximale Menge an Milch durch die Flüssigkeitsentnahmeeinrichtung 1 fließt. Demgegenüber ist die Stellschraube 8 gemäß der Fig. 2 in eine Stellung verdreht, in welcher der Durchflussquerschnitt verringert, d. h. gedrosselt ist. Gemäß der Fig. 3 befindet sich die Stellschraube 8 in einer Stellung, in welcher kein Durchfluss durch die Flüssigkeitsentnahmeeinrichtung 1 möglich ist. Dabei sind selbstverständlich nicht nur die beiden gezeigten Stellungen denkbar, sondern beliebig viele Zwischenstellungen. Durch die Regelung der Durchflussmenge an Milch bzw. Flüssigkeit durch die Flüssigkeitsentnahmeeinrichtung 1 kann insbesondere die Milchtemperatur, die Porigkeit und der Schaumanteil leicht beeinflusst werden. An der Stellschraube 8 oder an der Drosseleinrichtung 7 kann dabei eine Skala angeordnet sein, die die durch die Drosseleinrichtung 7 durchströmende Flüssigkeitsmenge visualisiert, um insbesondere eine definierte Einstellung wiederholt einstellen zu können.

Darüber hinaus kann eine Rasteinrichtung 9 (vgl. Fig. 4) vorgesehen sein, die die Stellschraube 8 in verschiedenen Drehstellungen fixiert. Hierbei können an beliebig vielen Stellen Rastpositionen festgelegt werden, um bspw. eine geschlossene Stellung leicht einstellen zu können und zugleich sicherzustellen, dass die Einstellung erhalten bleibt.

Generell können sämtliche Teile der Flüssigkeitsentnahmeeinrichtung 1 einfach zerlegt und dadurch leicht gereinigt werden, wobei die einzelnen Komponenten der Flüssigkeitsentnahmeeinrichtung 1 so ausgeführt sind, dass Materialien und Radien hygienisch unbedenklich sind. Die Drosseleinrichtung 7 muss dabei selbstverständlich nicht wie gezeigt eine Stellschraube 8 aufweisen, sondern kann generell irgendeine Art an Blende besitzen, mit welcher die Durchflussmenge durch die Flüssigkeitsentnahmeeinrichtung 1 einstellbar ist.

Mit der erfindungsgemäßen Flüssigkeitsentnahmeeinrichtung 1 lassen sich folgende, wesentliche Vorteile realisieren:
- der Milchschlauch 5' muss nicht mehr direkt in die Milch eingeführt werden, wodurch keine Kontaminierung der Milch durch Keime an der Schlauchaußenseite erfolgen kann,
- der Milchschlauch 5' muss nicht mehr außen gereinigt werden (Hygiene, Zeitersparnis und Handhabungskomfort),
- bei der Verwendung der Lanze 3 in der Originalverpackung der Milch kann diese nach Entnahme entsorgt werden,
- einfaches Verbinden der Flüssigkeitsentnahmeeinrichtung 1 bspw. mit einem Kaffeevollautomaten 6,
- Milchschlauch 5' oder Rohr wird außen nicht mit Milch benetzt,
- durch die Drosseleinrichtung 7 kann die Durchflussmenge und über diese die Milchtemperatur und/oder die Porigkeit und der Schaumanteil leicht beeinflusst werden,
- alternativ zur Regelung des Durchflussquerschnittes kann auch die Länge einer Blende (Engstelle) verändert werden, um die Durchflussmenge zu regulieren,
- durch Verschluss der Drosseleinrichtung 7 kann auch der Behälter 2 verschlossen werden,
- die Flüssigkeitsentnahmeeinrichtung 1 kann zusammen mit dem Behälter 2, bspw. der Milchpackung, im Kühlschrank aufbewahrt werden,
- die Lanze 3 ist vorzugsweise derart ausgebildet, dass mit ihr ein Durchstechen des Behälters 2 ermöglicht wird, sodass eine zusätzlich vorhandene Öffnung des Behälters 2 zur sonstigen Benutzung frei bleibt,
- die Flüssigkeitsentnahmeeinrichtung 1 kann generell mit einem beliebigen Behälter 2 kombiniert werden,
- am Lanzenkopf 4 bzw. an der Drosseleinrichtung 7 ist eine Skala zum Finden und Festlegen persönlich bevorzugter Einstellungen vorgesehen,
- mittels einer Rasteinrichtung 9 lassen sich vordefinierte Stellungen der Drosseleinrichtung 7 leicht auffinden
- dass die Drosseleinrichtung 7 zur Temperatur und Porigkeitsregelung im Lanzenkopf 4 integriert ist,
- die Lanze 3 kann im Behälter 2 bleiben und hat eine Kupplung zum System Kaffeemaschine, wodurch letztere ohne Lanze 3 weiter benutzt werden kann (die Kaffeemaschine kann man ohne Lanze 3 betreiben / spülen / reinigen).

## Patentansprüche

1. Flüssigkeitsentnahmeeinrichtung (1), insbesondere zum Entnehmen von Milch aus einem Behälter (2), mit
- einer rohrförmigen, steifen Lanze (3) zum Einstecken in den Behälter (2),
- einem Lanzenkopf (4), in welchen die Lanze (3) und zumindest ein weiteres Leitungselement (5), beispielsweise ein Milchschlauch (5') einsteckbar sind,
**dadurch gekennzeichnet,**
**dass** am Lanzenkopf (4) eine Drosseleinrichtung (7) zur Drosselung der durch die Flüssigkeitsentnahmeeinrichtung (1) strömenden Flüssigkeit vorgesehen ist, wobei über die Drosseleinrichtung (7) die Durchflussmenge durch die Flüssigkeitsentnahmeeinrichtung 1 einstellbar ist.

2. Flüssigkeitsentnahmeeinrichtung nach Anspruch 1,
**dadurch gekennzeichnet,**
**dass** die Lanze (3) aus Edelstahl oder aus Kunststoff ausgebildet ist.

3. Flüssigkeitsentnahmeeinrichtung nach Anspruch 1 oder 2,
**dadurch gekennzeichnet,**
**dass** die Lanze (3) an ihrem freien Ende so geformt ist, dass sie zum Durchstechen von Behälterwandungen geeignet ist.

4. Flüssigkeitsentnahmeeinrichtung nach einem der Ansprüche 1 bis 3,
**dadurch gekennzeichnet,**
**dass** die Lanze (3) an ihrem freien Ende beispielsweise abgeschrägt und insbesondere geschärft ist.

5. Flüssigkeitsentnahmeeinrichtung nach einem der Ansprüche 1 bis 4,
**dadurch gekennzeichnet,**
**dass** die Drosseleinrichtung (7) eine Stellschraube (8) aufweist, mit der ein Durchflussquerschnitt oder -widerstand, wie beispielsweise eine Bohrungslänge, durch den Lanzenkopf (4) veränderbar ist.

6. Flüssigkeitsentnahmeeinrichtung nach Anspruch 5,
**dadurch gekennzeichnet,**
**dass** eine Rasteinrichtung (9) vorgesehen ist, welche die Stellschraube (8) in verschiedenen Drehstellungen fixiert.

7. Flüssigkeitsentnahmeeinrichtung nach Anspruch 5 oder 6,
**dadurch gekennzeichnet,**
**dass** am Lanzenkopf (4) oder an der Stellschraube (8) eine Skala angeordnet ist, die die durch die Drosseleinrichtung (7) durchströmende Flüssigkeitsmenge visualisiert.

8. Flüssigkeitsentnahmeeinrichtung nach einem der Ansprüche 1 bis 6,
**dadurch gekennzeichnet,**
**dass** die Lanze (3) zumindest die Länge der Höhe eines Milch-Tetra Paks^{®} aufweist.

9. Flüssigkeitsentnahmeeinrichtung nach einem der Ansprüche 1 bis 8,
**dadurch gekennzeichnet,**
**dass** die Lanze (3) eine zusätzliche Vorrichtung zur Ansaugung von Luft, Gasen oder Fluiden aufweist.

10. Flüssigkeitsentnahmeeinrichtung nach einem der Ansprüche 1 bis 9,
**dadurch gekennzeichnet,**
**dass** die Lanze (3) einfach zerlegbar und reinigbar ist.

11. Kaffeevollautomat (6) mit einer Flüssigkeitsentnahmeeinrichtung (1) nach einem der Ansprüche 1 bis 10.

## Claims

1. A liquid removal device (1), in particular for removing milk from a container (2), comprising
- a tubular, stiff lance (3) for inserting into the container (2),
- a lance head (4), into which the lance (3) and at least one further line element (5), for example a milk tube (5'), can be inserted,
**characterized in**
**that** provision is made on the lance head (4) for a throttling device (7) for throttling the liquid, which flows through the liquid removal device (1), wherein the flow rate through the liquid removal device (1) can be adjusted via the throttling device (7).

2. The liquid removal device according to claim 1, **characterized in that** the lance (3) is embodied of stainless steel or of plastic.

3. The liquid removal device according to claim 1 or 2, **characterized in that**, on its free end, the lance (3) is formed such that it is suitable for piercing container walls.

4. The liquid removal device according to one of claims 1 to 3, **characterized in that**, on its free end, the lance (3) is beveled and in particular edged.

5. The liquid removal device according to one of claims 1 to 4, **characterized in that** the throttling device (7) encompasses an adjustable screw (8), by means of which a flow cross section or resistance, such as a bore length, can be changed by means of the lance head (4).

6. The liquid removal device according to claim 5, **characterized in that** provision is made for a locking device (9), which fixes the adjusting screw (8) in different rotational positions.

7. The liquid removal device according to claim 5 or 6, **characterized in that** a dial, which visualizes the liquid quantity that flows through the throttling device (7), is arranged on the lance head (4) or on the adjusting screw (8).

8. The liquid removal device according to one of claims 1 to 6, **characterized in that** the lance (3) encompasses at least the length of the height of a milk Tetra Pak®.

9. The liquid removal device according to one of claims 1 to 8, **characterized in that** the lance (3) encompasses an additional device for drawing in air, gases or fluids.

10. The liquid removal device according to one of claims 1 to 9, **characterized in that** the lance (3) can be disassembled and cleaned easily.

11. A fully-automatic coffee maker (6) comprising a liquid removal device (1) according to one of claims 1 to 10.

## Revendications

1. Système de prélèvement de liquide (1), notamment pour prélever du lait dans un contenant (2), avec
- une lance (3) tubulaire rigide, destinée à être insérée dans le contenant (2)
- une tête de lance (4), dans lequel la lance (3) et au moins un élément de conduit (5) supplémentaire, par exemple un flexible à lait (5') sont insérables,
**caractérisé en ce que** sur la tête de lance (4), il est prévu un système d'étranglement (7) pour étrangler le liquide circulant à travers le système de prélèvement de liquide (1), le débit à travers le système de prélèvement de liquide (1) étant réglable par l'intermédiaire du système d'étranglement (7).

2. Système de prélèvement de liquide selon la revendication 1, **caractérisé en ce que** la lance (3) est conçue en acier inoxydable ou en matière plastique.

3. Système de prélèvement de liquide selon la revendication 1 ou la revendication 2, **caractérisé en ce que** sur son extrémité libre, la lance (3) est conformée de sorte à être adaptée pour perforer des parois de contenants.

4. Système de prélèvement de liquide selon l'une quelconque des revendications 1 à 3, **caractérisé en ce que** sur son extrémité libre, la lance (3) est par exemple chanfreinée et notamment affilée.

5. Système de prélèvement de liquide selon l'une quelconque des revendications 1 à 4, **caractérisé en ce que** le système d'étranglement (7) comporte une vis de réglage (8) permettant d'ajuster une section transversale ou un limiteur de débit, comme par exemple une longueur de perçage à travers la tête de lance (4).

6. Système de prélèvement de liquide selon la revendication 5, **caractérisé en ce qu'**il est prévu un système d'enclenchement (9) qui fixe la vis de réglage (8) dans différentes positions en rotation.

7. Système de prélèvement de liquide selon la revendication 5 ou la revendication 6, **caractérisé en ce que** sur la tête de lance (4) ou sur la vis de réglage (8) est placée une graduation qui visualise le volume de liquide circulant à travers le système d'étranglement (7).

8. Système de prélèvement de liquide selon l'une quelconque des revendications 1 à 6, **caractérisé en ce que** la lance (3) présente au moins la longueur de la hauteur d'un Tetra Pak® de lait.

9. Système de prélèvement de liquide selon l'une quelconque des revendications 1 à 8, **caractérisé en ce que** la lance (3) comporte un dispositif supplémentaire pour l'aspiration d'air, de gaz ou de fluides.

10. Système de prélèvement de liquide selon l'une quelconque des revendications 1 à 9, **caractérisé en ce que** la lance (3) est facile à démonter et à nettoyer.

11. Machine à café (6) entièrement automatique avec un système de prélèvement de liquide (1) selon l'une quelconque des revendications 1 à 10.
